# EUROPEAN PATENT APPLICATION

(11) **EP 2 894 508 A1**
(43) Date of publication of application: **15.07.2015**
(21) Application number: 13306899.9
(22) Date of filing: 31.12.2013
(51) Int. Cl.: G02B 27/01

(54) **Method for displaying a content through either a head mounted display device or a display device, corresponding head mounted display device and computer program product**

(71) Applicant: Thomson Licensing, 92130 Issy-les-Moulineaux (FR)
(72) Inventor: Doyen, Didier, 35576 CESSON SEVIGNE (FR); Orhand, Anita, 35576 CESSON SEVIGNE (FR); Vial, Jean-Francois, 35576 CESSON SEVIGNE (FR)
(74) Representative: Huchet, Anne

(57) **Abstract**

In one embodiment, it is proposed a method for displaying a content through either a head mounted display device (100) or a display device (104). The method is remarkable in that it comprises:
- detecting a presence of a display device (104) in a field of view (103) associated with a position of a head mounted display device ;
- in case of detection of a presence of said display device (104), detecting an operating state of said display device; and if said operating state is on, meaning that said display device is displaying a content, said head mounted display device switches off, and if said operating state is off, said head mounted display device activates said display device in order to display said content on it;
- in case of absence of a presence of said display device, displaying (101) a content through said head mounted display device.

## Description

### Field of the invention

The invention relates to the display of content (such as sequence of frame, video content, etc.) through head mounted devices. More precisely, the invention is to be used in the context where a person uses a wearable computer with a head-mounted display, such as for example see trough glasses.

### Background of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Wearable computers with a head-mounted display, also named head mounted display devices (or also see-through head-mounted display devices) such as the one depicted in the documents US2013/0069985 and US20130249946**,** are becoming more and more popular. Indeed, a head mounted display device provides to a user a freedom of movement and the ability to access to content (such as video, etc.) wherever he is. However, it is not yet defined how such device is going to interact with existing display devices such as a TV set with a display screen, and how the user can make the most of that kind of device.

The present invention proposes to fill the gap by the use of a particular technique for displaying content via interactions between an head mounted display device and a display device.

### Summary of the invention

The present invention is directed to a method for displaying a content through either a head mounted display device or a display device. The method is remarkable in that it comprises:
- detecting a presence of a display device in a field of view associated with a position of a head mounted display device ;
- in case of detection of a presence of said display device, detecting an operating state of said display device; and if said operating state is on, meaning that said display device is displaying a content, said head mounted display device switches off, and if said operating state is off, said head mounted display device activates said display device in order to display said content on it;
- in case of absence of a presence of said display device, displaying a content through said head mounted display device.

One purpose of the invention is to enable a user equipped with a head-mounted display device to still view the content displayed on a display device (such as a screen), especially when he is not in front of the display device anymore (i.e. he is not in the field of view). It could be another content that could be displayed through the head-mounted display when the user moves his head in such a way that a sensor cannot detect anymore the presence of the display device in the field of view associated with the position of the head-mounted display device.

In a preferred embodiment, the method for displaying is remarkable in that when said content is displayed through said head mounted display device, it is the same as the one displayed on said display device.

More precisely, said display device can be a previous detected display device, or can be a device comprised in a list of devices that are positioned in an area defined according to the position of the head mounted display device. In that case, a display device could communicate through radio communication means with the head mounted display device.

In a preferred embodiment, the method for displaying is remarkable in that when said content is displayed through said head mounted display device, it is different from the one displayed on said display device.

In a preferred embodiment, the method for displaying is remarkable in that said content displayed through said head mounted display device is linked to said content displayed on said display device.

Hence, in this embodiment, the content displayed through the head mounted display device can be considered as an extension of the content displayed by the display device. Therefore, it provides to the user a kind of panoramic view.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory'),* for example a CD-ROM (which stands for *"Compact Disc - Read Only Memory')* or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more sub-programs of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc.

In another embodiment, the present invention is directed to a head mounted display device. Such device is remarkable in that it comprises:
- means for detecting a presence of a display device in a field of view associated with a position of said head mounted display device ;
- means for detecting an operating state of said display device that are activated in case of detection of a presence of said display device; and if said operating state is on, meaning that said display device is displaying a content, said head mounted display device switches off, and if said operating state is off, said head mounted display device activates said display device in order to display said content on it;
- means for displaying a content through said head mounted display device that are activated in case of absence of a presence of said display device.

In another embodiment, the head mounted display device is remarkable in that when said content is displayed through said head mounted display device, it is the same as the one displayed on said display device.

In another embodiment, the head mounted display device is remarkable in that when said content is displayed through said head mounted display device, it is different from the one displayed on said display device.

In another embodiment, the head mounted display device is remarkable in that said content displayed through said head mounted display device is linked to said content displayed on said display device.

In another embodiment, the head mounted display device is remarkable in that when said head mounted display device activates said display device, it enters in an idle mode.

### Brief description of the figures

The above and other aspects of the invention will become more apparent by the following detailed description of exemplary embodiments thereof with reference to the attached drawings in which:
Figure 1 presents a head mounted device according to one embodiment of the invention;
Figure 2 presents a head mounted device according to one embodiment of the invention;
Figure 3 discloses an electronic device that can be used to perform one or several steps of the methods disclosed in the present document.

### Detailed description

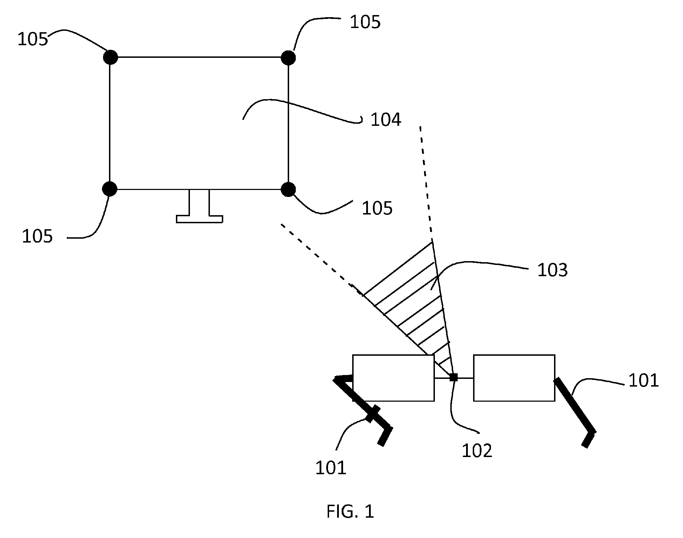

Figure 1 presents a head mounted device according to one embodiment of the invention.

A head mounted display device, referenced 100, according to one embodiment of the invention, comprises means, referenced 101 that enable a user (not represented on this figure) to visualize a content displayed through the head mounted device 100 (either by performing a projection into the retina of the user, or either by defining a projection area into the glasses of the head mounted device 100). It should be noticed that a user can still perceive the environment around him when he wears such head mounted display device 100. Hence, the head mounted display device in the present document can not be assimilated to a device that occults the field of view of the user (in the sense that the user can not perceive his environment) as for example the "Sony Glasstron" device. The head mounted device 100 also comprises a sensor, referenced 102, that defines a field of view (which can be defined as a volume in which each point can be monitored or tracked by the sensor 102), partially referenced 103.

According to one embodiment of the invention, the head mounted display device 100 can detect, through the use of the sensor 102, if a display device (such as a screen), referenced 104, belongs to a field of view. In one embodiment, the detection can be performed by shape recognition. In this embodiment, the head mounted display device 100 comprises a processing unit that is able to execute a shape recognition algorithm. In another embodiment, the detection can be performed via the detection by the sensor 102 of data emitted by beacons, referenced 105, positioned around or inside the display device 104. These beacons 105 can also transmit to the head mounted device 100 data information related to the features of the display device (such as the size of the display device, the supported resolution(s), an operation state of the display device (on or off), etc.). While at least one beacon 105 belongs to the field of view, the head mounted display device 100 doesn't display data through the means 101. Hence, the head mounted display device 100 is off or in an idle state. In another embodiment, only one beacon 105 is associated with a display device 104. This beacon 105 can also be integrated in the display device 104 itself. In one embodiment the beacon 105 is a physical tag providing metadata. In another embodiment, such beacon 105 is an RFID tag and the sensor 102 comprises an RFID reader/detector. In another embodiment, such beacon 105 is a QR (Quick Response) code. In another embodiment, such beacon 105 is a LCD display device that is able to generate and display QR codes in function of the values of some features of the display device 104. Hence, in that case, the beacon 105 can be viewed as a dynamic QR code.

In one embodiment, when a user was watching a content displayed through the head mounted display device 100, and he turns his head in such a way that the field of view previously defined comprises a display device that is in an idle mode (or even switch off), the head mounted display device 100 can transmit through dedicated means an information to the display device 104 (if such action was validated by the user) in order to display the content that was displayed through the head mounted display device 100 and then to turn off the head mounted display device 100. In one embodiment, a dedicated list of display devices that can be controlled in such way by the head mounted display device 100 is stored in a memory unit within the head mounted display device 100. This list can be modified (for adding or deleting elements in the list) by the user either through the head mounted display device 100, or through a device that can manage features of the head mounted display device 100. In that case, a secure communication link must be established between the head mounted display device 100 and this device that can manage the head mounted display device 100. One skilled in the art could use well known technique to set up this secure communication link. In one embodiment, one or several groups of devices are comprised in the list. These groups are linked to some different places (the house, the work place, etc.), and can be viewed as the authorized display devices that can be controlled by a head mounted display device 100 in a geographical area. In order to detect the geographical position of the head mounted display device 100, a GPS module is comprised in the head mounted display device 100.

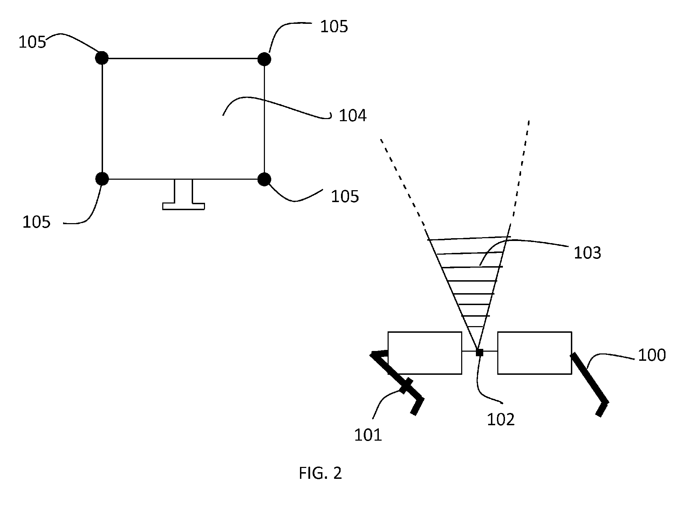

Figure 2 presents a head mounted device according to one embodiment of the invention.

In this figure, the field of view 103 defined in function of the orientation of the sensor 102, does not comprise a beacon 105. In such configuration, as the sensor 102 does not detect such beacon 105, the head mounted device 100 turns on (or activates) the means 101 that enable to display a content through the head mounted display device 100. The content displayed can be chosen by the user. For example, he can choose to display a content from a TV-channel.

In the case that the head mounted device 100 was in the configuration of the figure 1, and that he was watching a content displayed by the display device 104 (for example a first match in a football completion), when the user turns his head in such way that he reaches to the configuration of the figure 2, then the head mounted display device turns on (or activates) and displays another content (for example a second match in a football completion played at the same time as the first match). Therefore, the user is able to follow the two matches at the same time just by moving his head.

In another embodiment, he can choose to display the same content as the one he was watching through the display device 105. For example, in the case that the head mounted device 100 was in the configuration of the figure 1, and that he was watching a content displayed by the display device 104 (for example a first match in a football competition), and he has to go in another room, then the head mounted display device 100 turns on and displays the same content (the first match) once no beacon 105 is comprised in the field of view defined in function of the position of the sensor 102.

In another embodiment, the head mounted display device can take into account metadata that was transmitted by the beacon 105 in order to obtain content that is linked to the content displayed on the display device 104. In one embodiment of the invention, it is possible to have a panoramic view. For example, when the head of the user rotates his head from some degrees (from 10 to 80 degrees) either to the left or right side, he can still watch content related to a same scene that extends the initial scene displayed on the display device 105.

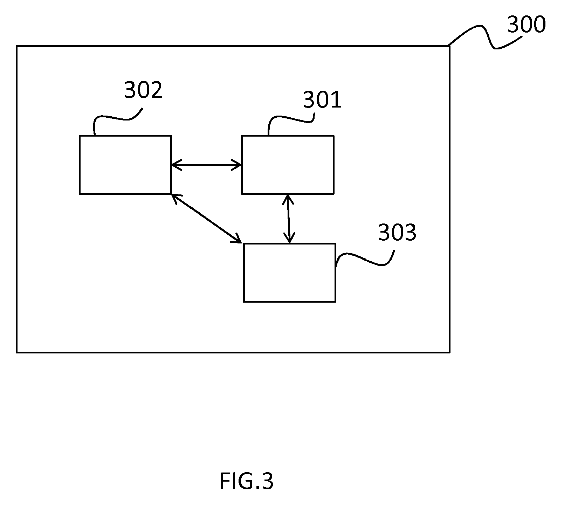

Figure 3 presents an electronic device that can be used to perform one or several steps of the methods disclosed in the present document.

Such device referenced 300 comprises a computing unit (for example a CPU, for *"Central Processing Unit"),* referenced 301, and one or several memory units (for example a RAM (for *"Random Access Memory")* blocks in which intermediate results can be stored temporarily during the execution of instructions a computer program, or a ROM *("Read Only Memory")* block in which, among other things, computer programs are stored, or an EEPROM *("Electrically-Erasable Programmable Read-Only Memory")* block, or a flash block) referenced 302. Computer programs are made of instructions that can be executed by the computing unit. Such device 300 can also comprise a dedicated unit, referenced 303, constituting an input-output interface to allow the device 300 to communicate with other devices. In particular, this dedicated unit 303 can be connected with an antenna (in order to perform communication without contacts), or with serial ports (to carry communications with contacts). Let's remark that the arrows in Figure 3 mean that the linked units can exchange data through buses for example together.

In an alternative embodiment, some or all of the steps of the method previously described, can be implemented in hardware in a programmable FPGA *("Field Programmable Gate Array')* component or ASIC *("Application-Specific Integrated Circuit")* component.

In an alternative embodiment, some or all of the steps of the method previously described, can be executed on an electronic device comprising memory units and processing units as the one disclosed in the Figure 3.

## Claims

1. Method for displaying a content through either a head mounted display device or a display device, **characterized in that** it comprises :
- detecting a presence of a display device in a field of view associated with a position of a head mounted display device ;
- in case of detection of a presence of said display device, detecting an operating state of said display device; and if said operating state is on, meaning that said display device is displaying a content, said head mounted display device switches off, and if said operating state is off, said head mounted display device activates said display device in order to display said content on it;
- in case of absence of a presence of said display device, displaying a content through said head mounted display device.

2. Method for displaying according to claim 1, **characterized in that** when said content is displayed through said head mounted display device, it is the same as the one displayed on said display device.

3. Method for displaying according to claim 1, **characterized in that** when said content is displayed through said head mounted display device, it is different from the one displayed on said display device.

4. Method for displaying according to claim 3, **characterized in that** said content displayed through said head mounted display device is linked to said content displayed on said display device.

5. Method for displaying according to any claims 1 to 4, **characterized in that** when said head mounted display device activates said display device, it enters in an idle mode.

6. A computer-readable and non-transient storage medium storing a computer program comprising a set of computer-executable instructions to implement a method for displaying a content when the instructions are executed by a computer, wherein the instructions comprise instructions, which when executed, configure the computer to perform a method for displaying of claims 1 to 5.

7. Head mounted display device being **characterized in that** it comprises :
- means for detecting a presence of a display device in a field of view associated with a position of said head mounted display device ;
- means for detecting an operating state of said display device that are activated in case of detection of a presence of said display device; and if said operating state is on, meaning that said display device is displaying a content, said head mounted display device switches off, and if said operating state is off, said head mounted display device activates said display device in order to display said content on it;
- means for displaying a content through said head mounted display device that are activated in case of absence of a presence of said display device.

8. Head mounted display device according to claim 7, **characterized in that** when said content is displayed through said head mounted display device, it is the same as the one displayed on said display device.

9. Head mounted display device according to claim 7, **characterized in that** when said content is displayed through said head mounted display device, it is different from the one displayed on said display device.

10. Head mounted display device according to claim 9, **characterized in that** said content displayed through said head mounted display device is linked to said content displayed on said display device.

11. Head mounted display device according to any claims 7 to 10, **characterized in that** when said head mounted display device activates said display device, it enters in an idle mode.
